# FASCICULE DE BREVET EUROPEEN

(11) **EP 0 982 825 B1**
(45) Date de publication et mention de la délivrance du brevet: **19.10.2005**
(21) Numéro de dépôt: 99402061.8
(22) Date de dépôt: 13.08.1999
(51) Int. Cl.: H02H 3/05, B04B 9/10

(54) **Dispositif de contrôle de la vitesse de rotation d'un moteur électrique et appareil de centrifugation équipé d'un tel dispositif**
Drehzahlregelvorrichtung für einen elektrischen Motor und Vorrichtung zum Schleudern mit einer solchen Vorrichtung
Apparatus for regulating the speed of rotation of an electrical motor and apparatus for centrifuging comprising such a device

(30) Priorité: 25.08.1998 FR 9810701
(43) Date de publication de la demande: 01.03.2000
(73) Titulaire: Jouan, 44800 Saint Herblain (FR)
(72) Inventeur: Pouvreau, Michel, 44160 Pontchâteau (FR)
(74) Mandataire: Moncheny, Michel

(56) Documents cités:
- DE-A- 19 504 032
- DE-C- 4 331 640
- US-A- 5 726 881

## Description

La présente invention est relative à un dispositif de contrôle de la vitesse de rotation d'un moteur électrique.

Elle s'applique en particulier au contrôle de la vitesse de rotation du rotor d'un appareil de centrifugation afin d'éviter que ce dernier soit entraîné à une vitesse de rotation supérieure à sa valeur maximale admissible.

Afin d'améliorer la fiabilité de tels dispositifs, ces derniers sont souvent dotés d'unités de surveillance redondantes afin d'éviter que la défaillance de l'une d'elles ait des conséquences néfastes pour le moteur.

Ainsi, on connaît, dans l'état de la technique, un dispositif de contrôle de la vitesse de rotation d'un moteur électrique du type comprenant une unité de commande de la vitesse de rotation du moteur, une unité analogique de limitation de vitesse raccordée à l'unité de commande et comprenant des moyens de comparaison entre au moins un signal de contrôle représentatif de la vitesse de rotation du moteur imposée à ce dernier par l'unité de commande et une valeur de seuil correspondant à la vitesse maximale à laquelle le moteur est autorisé à fonctionner, et des moyens pour déconnecter au moins temporairement le moteur de son alimentation en cas de dépassement de la valeur de seuil.

Un dispositif selon l'état de la technique est décrit dans le document US-A-5 726 881.

Un dispositif de ce type permet donc d'éviter que le moteur soit entraîné à une vitesse de rotation supérieure à sa vitesse maximale admissible.

Le but de l'invention est de fournir un dispositif de contrôle de ce type, capable en outre d'interdire la mise en rotation du moteur en cas de dysfonctionnement de l'unité de limitation de vitesse.

Elle a donc pour objet un dispositif de contrôle du type précité, caractérisé en ce qu'avant chaque mise en marche du moteur, l'unité de commande procède à une phase de test du bon fonctionnement de l'unité de limitation de vitesse par génération d'un signal de pilotage correspondant à une valeur de vitesse de rotation supérieure à la valeur de seuil.

Le dispositif de contrôle suivant l'invention peut en outre comporter une ou plusieurs des caractéristiques suivantes, prises isolément ou selon toutes les combinaisons techniquement possibles:
- il comporte en outre des deuxièmes moyens pour déconnecter le moteur de son alimentation au cours de la phase de test;
- le signal de contrôle est élaboré à partir d'un signal de sortie d'un comparateur d'une boucle de régulation de vitesse recevant en entrée un signal de consigne délivrée par l'unité de commande et un signal de mesure de la vitesse de rotation du moteur;
- l'unité de commande est raccordée à la sortie des premiers moyens pour déconnecter le moteur en vue de la détection du bon fonctionnement de l'unité de limitation de vitesse;
- l'unité de commande est constituée par une unité de commande à microprocesseur délivrant des signaux de pilotage du moteur sous la forme de signaux de commande par modulation en largeur d'impulsions fournis à un étage d'alimentation du moteur en énergie électrique triphasée, ledit étage d'alimentation étant alimenté par une source de tension continue par l'intermédiaire d'un étage à impédance variable sous le contrôle de l'unité de limitation de vitesse et lesdits au moins un signaux de contrôle sont élaborés à partir des signaux de pilotage; et
- l'étage à impédance variable est constitué par un étage de filtrage comportant un élément résistif en parallèle duquel est raccordé un circuit de dérivation équipé d'un élément de commutation piloté à l'ouverture par les moyens de comparaison, en cas de dépassement de la valeur de seuil.

L'invention a également pour objet un appareil de centrifugation comprenant un rotor entraîné en rotation par un moteur électrique, caractérisé en ce qu'il est équipé d'un dispositif de contrôle de la vitesse de rotation du moteur tel qu'il est défini ci-dessus.

Les caractéristiques et avantages ressortiront de la description suivante, donnée uniquement à titre d'exemple, et faite en référence aux dessins annexés sur lesquels:
- la figure 1 est un schéma synoptique d'un dispositif de contrôle de la vitesse de rotation d'un moteur selon un premier mode de réalisation; et
- la figure 2 est un schéma synoptique d'un dispositif de contrôle conforme à l'invention selon un deuxième mode de réalisation.

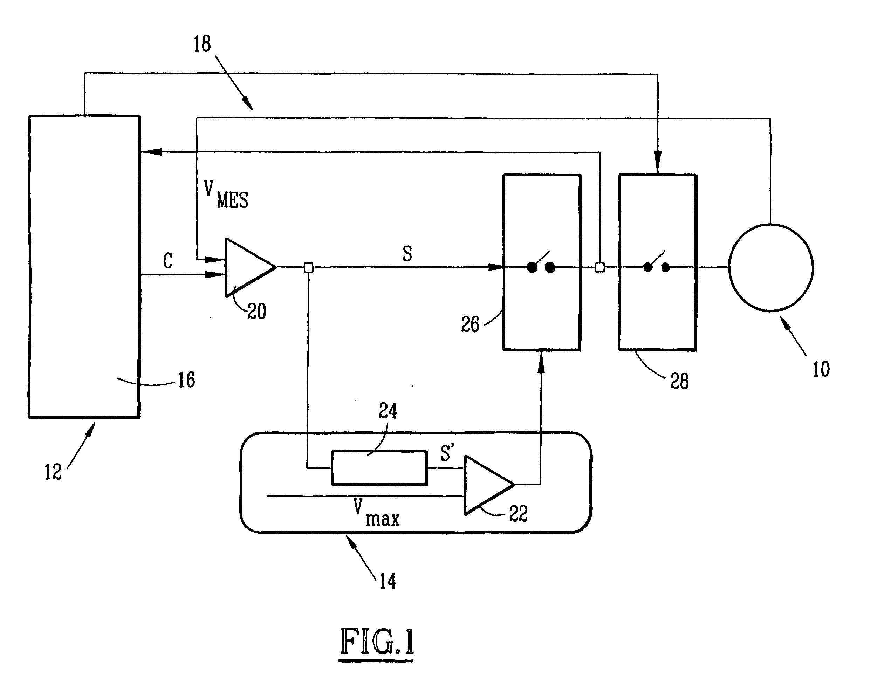

Sur la figure 1, on a représenté un dispositif de contrôle de la vitesse de rotation d'un moteur 10 entraînant un rotor (non représenté) d'un appareil de centrifugation.

Le dispositif de contrôle comporte deux unités de contrôle, 12 et 14, redondantes, permettant de commander la rotation du moteur 10 selon une vitesse à laquelle il est autorisé à être entraîné.

La première unité de contrôle 12 est constituée par une unité de commande destinée à asservir la vitesse de rotation du moteur sur une valeur de consigne C imposée.

Cette unité de contrôle 12, comporte, comme cela est classique, une unité 16 de commande et d'élaboration de la valeur de consigne C et une boucle de régulation 18 délivrant un signal S de pilotage du moteur.

Comme on le voit sur cette figure 1, la boucle de régulation 18 comporte un comparateur 20 recevant sur sa borne inverseuse le signal de consigne C et sur sa borne non-inverseuse un signal V_{MES} de mesure de la vitesse réelle de rotation du moteur.

La deuxième unité de contrôle 14 est constituée par une unité de limitation de vitesse adaptée pour éviter que cette dernière n'atteigne une valeur maximale admissible V_{MAX} pour le moteur.

Les unités de contrôle 12 et 14 sont réalisées à partir de composants de technologies différentes.

Ainsi, alors que la première unité de contrôle 12 est constituée par un processeur, réalisé à partir de composants numériques, la deuxième unité de contrôle 14 est réalisée à partir de composants analogiques de manière à éviter l'apparition de dysfonctionnements simultanés dans les deux unités de contrôle.

En outre, l'utilisation de composants analogiques permet de réduire sensiblement le coût du dispositif de contrôle.

Comme on le voit sur cette figure 1, l'unité 14 de limitation de vitesse comporte un comparateur 22 assurant une comparaison entre un signal S' représentatif de la vitesse imposée au moteur par l'unité de commande 12 et la valeur de seuil V_{MAX}.

Le signal S' est élaboré à partir du signal de pilotage S par des moyens de traitement 24 raccordés à la sortie du comparateur 20 de l'unité de commande 12 et adaptés pour convertir le signal de pilotage S du moteur en un signal correspondant à la vitesse imposée à ce dernier.

La sortie du comparateur 22 de l'unité de limitation de vitesse 14 est raccordée à un commutateur 26 de manière à déconnecter le moteur 10 de son alimentation, c'est-à-dire de la déconnecter de l'unité de commande 12, dès que le signal S' est supérieur à la valeur de seuil V_{MAX}.

Par ailleurs, un deuxième commutateur 28 est raccordé entre le premier commutateur 26 et le moteur 10.

Ce deuxième commutateur 28 est piloté par l'unité de commande 16 de manière à déconnecter le moteur de son alimentation lors d'une phase de test du bon fonctionnement de l'unité 14 de limitation de vitesse, intervenant à chaque mise en marche du moteur.

On voit enfin sur la figure 1 que la sortie du premier commutateur 26, située du côté du moteur 10, est raccordée à l'unité de commande 16 de manière à fournir à ce dernier une indication concernant l'état du commutateur 26.

Lors de chaque phase de test du fonctionnement de l'unité 14 de limitation de vitesse, qui intervient, comme mentionné précédemment, avant chaque cycle de mise en fonctionnement du moteur 10, l'unité de commande 16 génère un signal de consigne C correspondant à une valeur de vitesse supérieure à la valeur de seuil V_{MAX}, ce qui provoque l'ouverture du premier commutateur 26.

Cette ouverture, détectée par l'unité de commande 16 traduit un bon fonctionnement de l'unité de limitation de vitesse 14.

Dans ce cas, le moteur 10 peut être mis en fonctionnement.

On notera qu'au cours de cette phase de test préalable, l'unité de commande 16 provoque l'ouverture du deuxième commutateur 28 de manière à éviter une mise en rotation du moteur 10.

On conçoit donc que cette phase de test permet, avant toute mise en fonctionnement du moteur 10, de vérifier le bon fonctionnement de l'unité 14 de limitation de vitesse et ce, sans avoir à entraîner en rotation le moteur.

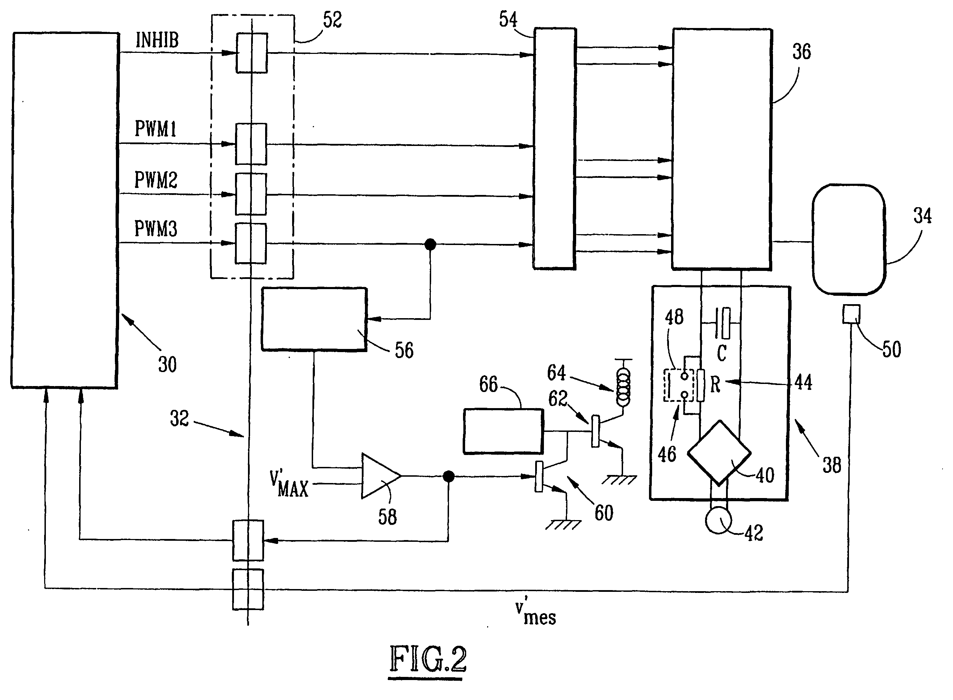

En référence à la figure 2, on va décrire un autre mode de réalisation du dispositif de contrôle conforme à l'invention.

Comme dans l'exemple de réalisation décrit en référence à la figure 1, ce dispositif comporte deux unités de contrôle redondantes, désignées respectivement par les références numériques 30 et 32 constituées l'une, 30, par une unité de commande à microprocesseur délivrant des signaux de pilotage du moteur 34, PWM1, PWM2 et PWM3 sous la forme de signaux de commande par modulation en largeur d'impulsions (MLI). Ces signaux de pilotage sont fournis à un étage d'alimentation 36 constitué par l'association de trois modules de puissance constitués chacun de cellules de commutation, par exemple à base de transistors bipolaires à grilles isolées (IGBT).

L'étage de puissance 36, qui constitue un circuit onduleur délivre au moteur 36 une énergie électrique triphasée équilibrée variable en tension et en fréquence.

Il est alimenté en tension continue par une source de tension 38 comportant un pont redresseur à diode 40 alimenté en tension alternative par le secteur, schématiquement représenté et désigné par la référence 42, et un circuit de filtrage 44 constitué par l'association d'une résistance R et d'un condensateur C.

Comme on le voit sur cette figure 2, un circuit de dérivation 46 est branché en parallèle sur la résistance R et comporte un élément de commutation 48 positionné à l'état fermé lors du fonctionnement normal du dispositif.

On conçoit donc que le circuit de filtrage 44 constitue un étage à impédance variable en fonction de l'état de l'élément de commutation 48.

Par ailleurs, un tachymètre 50 mesure la vitesse de rotation du moteur 34 et fournit la valeur mesurée V'_{MES} à l'unité de commande 30 qui, en réponse adapte les signaux de pilotage PWM1, PWM2 et PWM3 de manière à asservir la vitesse de rotation du moteur 34 sur une valeur prédéterminée imposée par l'unité de commande 30.

Comme on le voit sur la figure 2, les signaux de pilotage PWM1, PWM2 et PWM3 sont fournis à l'étage de puissance 36 par des moyens d'isolation 52, par exemple à base de transistors optiques et par l'intermédiaire d'un circuit de mise en forme 54 approprié.

L'unité de limitation de vitesse 32 est raccordée, en entrée, entre les moyens d'isolation 52 et le circuit de mise en forme 54, à au moins une ligne de pilotage de l'étage de puissance, véhiculant les signaux de pilotage,

Sur cette figure, on a considéré que l'unité de limitation de vitesse 32 est raccordée à une seule ligne de pilotage, mais bien entendu, en variante, elle peut prélever des informations concernant concernant la vitesse du moteur à partir de deux signaux de pilotage.

Un circuit de conversion 56 assure la conversion de la fréquence de commande du moteur véhiculée par les signaux de pilotage en une tension U_{MLI} de contrôle correspondant à la valeur de la vitesse de rotation imposée au moteur 34.

Il est raccordé, en sortie, à un comparateur 58 assurant une comparaison entre la tension D_{MLI} délivrée par le circuit de conversion 56 et une valeur de seuil V'_{MAX} correspondant à la valeur maximale admissible pour le moteur 34.

La sortie du comparateur 58 pilote la base d'un transistor 60 fonctionnant en régime de commutation de manière à le rendre passant dès que la valeur de la tension U_{MLI} fournie par le circuit de conversion 56 dépasse la valeur de seuil V'_{MAX}.

Le transistor 60 pilote la base d'un deuxième transistor 62, fonctionnant également en régime de commutation et au collecteur duquel est raccordé un relai 64 de pilotage du commutateur 48 mentionné précédemment.

Par ailleurs, un dispositif de temporisation 66 est également raccordé à la base du deuxième transistor 62 de manière à rendre ce dernier passant pendant une période de temps prédéterminée, comme cela sera décrit par la suite.

On voit enfin sur la figure 2 que la base du premier transistor 60, raccordée à la sortie du comparateur 58 est également connecté à l'unité de commande 30 et que cette dernière fournit un signal INHIB au circuit de mise en forme 54 de manière à inhiber les signaux de pilotage quand ce signal INHIB est au niveau haut.

Le dispositif qui vient d'être décrit fonctionne de la façon suivante.

Comme pour l'exemple de réalisation décrit précédemment en référence à la figure 1, avant chaque cycle de mise en fonctionnement du moteur 34, le dispositif procède à une phase de test du bon fonctionnement de l'unité de limitation de vitesse 32.

Pour ce faire, l'unité de commande 30 positionne à un niveau haut le signal INHIB de manière à éviter une mise en rotation du moteur 34 et génère des signaux de pilotage PWM1, PWM2, et PWM3 correspondants à une vitesse de rotation du moteur 34 supérieure à sa vitesse maximale admissible.

Dès lors, la sortie du comparateur 58 passe au niveau haut ce qui provoque l'ouverture de l'élément de commutation 48, et une coupure de l'alimentation du moteur 34 dans la mesure où l'énergie électrique est absorbée par la résistance R.

Dès que le passage au niveau haut de la sortie du comparateur 58 est détecté par l'unité de commande 30, cette dernière autorise la mise en marche du moteur 36.

On notera enfin que lors de la mise sous tension du dispositif, le circuit de synchronisation 66 provoque le passage momentané du commutateur 48 à l'état ouvert de manière à limiter le courant de charge du condensateur C.

## Revendications

1. Dispositif de contrôle de la vitesse de rotation d'un moteur électrique (10; 34), comprenant une unité de commande (16; 30) de la vitesse de rotation du moteur et une unité de limitation de vitesse (14; 32) raccordée à l'unité de commande (16; 30) et comportant des moyens (24, 58) de comparaison entre au moins un signal de contrôle (S'; U_{MLI}) représentatif de la vitesse de rotation du moteur imposée à ce dernier par l'unité de commande (16; 30) et une valeur de seuil (V_{MAX}; V'_{MAX}) correspondant à la valeur maximale à laquelle le moteur (10; 34) est autorisé à fonctionner, le dispositif comprenant en outre des moyens pour déconnecter au moins temporairement le moteur (10; 34) de son alimentation en cas de dépassement de la valeur de seuil, **caractérisé en ce qu'**avant chaque mise en marche du moteur, l'unité de commande (16; 30) procède à une phase de test du bon fonctionnement de l'unité de limitation de vitesse (14; 32) par génération d'un signal de contrôle (S'; U_{MLI}) correspondant à une valeur de vitesse de rotation supérieure à la valeur de seuil.

2. Dispositif selon la revendication 1, **caractérisé en ce qu'**il comporte en outre des deuxièmes moyens (28; 30) pour déconnecter le moteur de son alimentation au cours de la phase de test.

3. Dispositif selon l'une des revendications 1 et 2, **caractérisé en ce que** le signal de contrôle est élaboré à partir d'un signal de sortie d'un comparateur (20) d'une boucle de régulation de vitesse (18) recevant en entrée un signal de consigne (C) délivré par l'unité de commande (16) et un signal de mesure (V_{MES}) de la vitesse de rotation du moteur.

4. Dispositif selon la revendication 3, **caractérisé en ce que** l'unité de commande (16) est raccordée à la sortie des premiers moyens (26) pour déconnecter le moteur en vue de la détection du bon fonctionnement de l'unité de limitation de vitesse (14).

5. Dispositif selon l'une des revendications 1 et 2, **caractérisé en ce que** l'unité de commande (30) est constituée par une unité de commande à microprocesseur délivrant des signaux de pilotage (PWM1, PWM2, PWM3) sous la forme de signaux de commande par modulation en largeur d'impulsions fournis à un étage (36) d'alimentation du moteur en énergie électrique triphasée, ledit étage d'alimentation (36) étant alimenté par une source de tension continue (42) par l'intermédiaire d'un étage (38) à impédance variable sous le contrôle de l'unité de limitation de vitesse, et **en ce que** lesdits au moins un signal de contrôle sont élaborés à partir des signaux de pilotage.

6. Dispositif selon la revendication 5, **caractérisé en ce que** l'étage à impédance variable est constitué par un étage de filtrage (44) comportant un élément résistif (R) en parallèle duquel est raccordé un circuit de dérivation (46) équipé d'un élément de commutation (48) piloté à l'ouverture par les moyens de comparaison, en cas de dépassement de la valeur de seuil.

7. Dispositif selon l'une quelconque des revendications 1 à 6, **caractérisé en ce que** l'unité de limitation de vitesse est une unité de limitation de vitesse analogique.

8. Appareil de centrifugation comprenant un rotor entraîné en rotation par un moteur électrique, **caractérisé en ce qu'**il est équipé d'un dispositif de contrôle de la vitesse de rotation du moteur selon l'une quelconque des revendications 1 à 7.

## Patentansprüche

1. Vorrichtung zur Kontrolle der Rotationsgeschwindigkeit eines Elektromotors (10; 34), umfassend eine Steuereinheit (16; 30) für die Rotationsgeschwindigkeit des Motors und eine Einheit zur Geschwindigkeitsbegrenzung (14; 32), die mit der Steuereinheit (16; 30) verbunden ist und Vergleichsmittel (24; 58) zwischen mindestens einem Kontrollsignal (S';U_{MLI}), das charakteristisch für die Rotationsgeschwindigkeit des Motors ist, die diesem letzteren durch die Steuereinheit (16; 30) auferlegt wird, und einem Schwellwert (V_{MAX}; V'_{MAX}) aufweist, der einem Maximalwert entspricht, bis zu welchem der Motor (10;34) zugelassen ist zu funktionieren, wobei die Vorrichtung außerdem Mittel zum zumindest zeitweiligem Trennen des Motors (10; 34) von seiner Versorgung im Fall der Überschreitung des Schwellwerts umfasst,
**dadurch** charakterisiert, dass
vor jedem Anlassen des Motors die Steuereinheit (16; 30) eine Testphase der Funktionsfähigkeit der Einheit zur Geschwindigkeitsbegrenzung (14; 32) durch die Generierung eines Kontrollsignals (S'; U_{MLI}) durchführt, das einem Wert der Rotationsgeschwindigkeit entspricht, der höher als der Schwellwert ist.

2. Vorrichtung gemäß Anspruch 1, **dadurch** charakterisiert, dass sie außerdem zweite Mittel (28; 30) zum Trennen des Motors von seiner Versorgung während der Testphase aufweist.

3. Vorrichtung gemäß einem der Ansprüche 1 und 2, **dadurch** charakterisiert, dass das Kontrollsignal aus einem Ausgangssignal eines Komparators (20) einer Regelschleife der Geschwindigkeit (18) gebildet wird, der am Eingang ein Einstellsignal (C), das durch die Steuereinheit (16) ausgegeben wird, und ein Messsignal (V_{MES}) der Rotationsgeschwindigkeit des Motors empfängt.

4. Vorrichtung gemäß Anspruch 3, **dadurch** charakterisiert, dass die Steuereinheit (16) mit dem Ausgang der ersten Mittel (26) zum Trennen des Motors im Hinblick auf die Feststellung der Funktionsfähigkeit der Einheit zur Geschwindigkeitsbegrenzung (14) verbunden ist.

5. Vorrichtung gemäß einem der Ansprüche 1 und 2, **dadurch** charakterisiert, dass die Steuereinheit (30) durch eine Mikroprozessorsteuereinheit gebildet wird, die Signale zur Ansteuerung (PWM1, PWM2, PWM3) in Form von Steuersignalen durch eine Pulslängenmodulatiön ausgibt, die in einer Versorgungsstufe (36) des Motors mit elektrischer Dreiphasenenergie bereitgestellt werden, wobei die genannte Versorgungsstufe (36) durch eine Gleichspannungsquelle (42) über eine variable Impedanzstufe (38) unter der Kontrolle der Einheit zur Geschwindigkeitsbegrenzung gespeist wird, und dass das genannte mindestens eine Kontrollsignal aus den Signalen zur Ansteuerung gebildet wird.

6. Vorrichtung gemäß Anspruch 5, **dadurch** charakterisiert, dass die variable Impedanzstufe durch eine Filterstufe (44) gebildet wird, die ein Widerstandselement (R) aufweist, zu welchem parallel ein Nebenkreis (46) verbunden ist, der mit einem Umschaltungselement (48) ausgestattet ist, das am Eingang durch die Vergleichsmittel im Fall der Überschreitung des Schwellwertes gesteuert wird.

7. Vorrichtung gemäß einem der Ansprüche 1 bis 6, **dadurch** charakterisiert, dass die Einheit zur Geschwindigkeitsbegrenzung eine analoge Einheit zur Geschwindigkeitsbegrenzung ist.

8. Gerät zum Zentrifugieren umfassend einen Rotor, der drehend durch einen Elektromotor angetrieben wird, **dadurch** charakterisiert, dass es mit einer Vorrichtung zur Kontrolle der Rotationsgeschwindigkeit eines Motors gemäß einem beliebigen der Ansprüche 1 bis 7 ausgestattet ist.

## Claims

1. Device for monitoring the speed of rotation of an electric motor (10, 34), including a control unit (16, 30) for controlling the motor rotation speed and a speed limiter unit (14, 32) connected to the control unit (16, 30) and having means (24, 58) of comparison of at least one monitoring signal (S', U_{PWM}) representing the motor rotation speed as set by the control unit (16, 30) and a threshold value (V_{MAX}, V'_{MAX}) corresponding to the maximum value at which the motor (10, 34) is allowed to operate, the device additionally including means for disconnecting, at least temporarily, the motor (10, 34) from its power supply if the threshold value is exceeded, **characterised in that** before each activation of the motor, the control unit (16, 30) enters a test phase to test for correct operation of the speed limiter unit (14, 32) by generating a monitoring signal (S', U_{PWM}) corresponding to a rotation speed value that is greater than the threshold value.

2. Device according to Claim 1, **characterised in that** it additionally includes second means (28, 30) for disconnecting the motor from its power supply during the test phase.

3. Device according to one of Claims 1 and 2, **characterised in that** the monitoring signal is generated from an output signal of a comparator (20) in a speed feedback loop (18) receiving at its input a reference signal (C) delivered by the control unit (16) and a measurement signal (V_{MES}) representing the motor rotation speed measurement.

4. Device according to Claim 3, **characterised in that** the control unit (16) is connected to the output of the first means (26) for disconnecting the motor in preparation for detecting the correct operation of the speed limiter unit (14).

5. Device according to one of Claims 1 and 2, **characterised in that** the control unit (30) consists of a microprocessor-based control unit delivering driver signals (PWM1, PWM2, PWM3) in the form of pulse width modulated control signals conveyed to a power stage (36) supplying three-phase power to the motor, the said power stage (36) being fed by a DC source (42) via a variable impedance stage (38) under the control of the speed limiter unit, and **in that** the said at least one monitoring signal is generated from the driver signals.

6. Device according to Claim 5, **characterised in that** the variable impedance stage consists of a filtering stage (44) including a resistive element (R), in parallel with which is connected a branch circuit (46) equipped with a switching element (48) the opening of which is driven by the comparison means in the event that the threshold value is exceeded.

7. Device according to any one of Claims 1 to 6, **characterised in that** the speed limiter unit is an analogue speed limiter unit.

8. Centrifugation apparatus including a rotor rotationally driven by an electric motor, **characterised in that** it is fitted with a motor rotation speed monitoring device according to any one of Claims 1 to 7.
